# EUROPEAN PATENT APPLICATION

(11) **EP 0 939 510 A2**
(43) Date of publication of application: **01.09.1999**
(21) Application number: 99301475.2
(22) Date of filing: 26.02.1999
(51) Int. Cl.: H04L 1/12, H04L 1/18, G11B 20/10

(54) **Wireless transmitting method**

(30) Priority: 27.02.1998 JP 4723098
(71) Applicant: SONY CORPORATION, Tokyo (JP)
(72) Inventor: Sugaya, Shigeru, Shinagawa-ku, Tokyo (JP); Maeshima, Yasunori, Shinagawa-ku, Tokyo (JP)
(74) Representative: Nicholls, Michael John

(57) **Abstract**

A wireless transmitting method, comprising the steps of forming a frame having a predetermined time period, placing a stream transmission area STA and an asynchronous transmission area ASYNCA in the same transmission path, the stream transmission area STA having a predetermined transmission band for successively transmitting data streams, transmitting isochronous data in the stream transmission area STA, and transmitting asynchronous data in the asynchronous transmission area ASYNCA.

## Description

The present invention relates to a wireless transmitting method suitable for wirelessly transmitting chronologically continuous data streams (such as digital audio data and digital video data) and asynchronous data (such as commands) between for example digital audio units or between digital video units.

Audio units and video units have been digitized as with for example CD (Compact Disc) players, MD (Mini Disc) recorders/players, digital VCRs, digital cameras, and DVD (Digital Versatile Disc) players. As personal computers have become common, systems that connect such digital audio units or digital video units to personal computers have been proposed. As an interface that accomplishes a system that connects such digital audio units or such digital video units to a personal computer, IEEE 1394 is becoming attractive.

The IEEE 1394 interface supports both an isochronous transmission mode and an asynchronous transmission mode. The isochronous transmission mode is suitable for transmitting chronologically continuous data streams such as video data and audio data at high speed. The asynchronous transmission mode is suitable for transmitting various commands and files. Since the IEEE 1394 interface supports both the isochronous transmission mode and the asynchronous transmission mode, when the IEEE 1394 interface is used, video data and audio data can be transmitted between digital audio units and between digital video units, respectively. With a personal computer connected to such digital units through the IEEE 1394 interface, the user can easily control and edit video data and audio data.

The IEEE 1394 interface is a wired interface. To structure such a system with a wired interface, cable connections are required. In addition, such cable connections tend to become complicated. Moreover, with a wired interface, it is difficult to connect units that are disposed in different rooms.

Thus, it is desired to accomplish a wireless interface that wirelessly connects digital audio units or digital video units and connects these units and a personal computer. When digital audio units or digital video units are wirelessly connected or when these units and a personal computer are wirelessly connected, as with the above-described the IEEE 1394 interface, it is desired to support both the isochronous transmission mode that allows a data stream such as video data or audio data to be transmitted at high speed and the asynchronous transmission mode that allows asynchronous data such as commands and files to be transmitted in the same manner as the IEEE 1394 interface.

To wirelessly transmit data with the IEEE 1394 interface, it is necessary to transmit two types of data transmission of high speed data streams (such as video data and audio data) and asynchronous data (such as commands and files).

Conventionally, the method using data re-transmitting is used for a wireless data communicating. According to the method, after data is transmitted to a remote party, it is determined whether acknowledgment information is received from the remote party. When the acknowledgment information has not been received, a data re-transmitting operation is performed. When such a data re-transmitting operation is performed, it is not necessary to secure a transmission path in advance. Thus, data communication can be effectively performed. When such a data re-transmitting operation is performed, if an error takes place, the data is re-transmitted. Thus, the data can be correctly transmitted. However, in such a method, it is difficult to transmit data streams such as video data and audio data at high speed.

To allow data streams such as video data and audio data at high speed, a data transmission band is secured in advance and the data streams are transmitted with the secured band.

However, in the IEEE 1394 interface, data streams such as video data and audio data and asynchronous data should be transmitted. When all the transmission band is used for data streams, asynchronous data cannot be transmitted.

In the data transmitting method using the data re-transmitting operation, when an error takes place on the transmission path, data is re-transmitted. Thus, an error hardly takes place. However, if a data stream is transmitted at high speed in a pre-secured band, since the data re-transmitting operation is not performed, an error takes place.

Thus, an object of the present invention is to provide a wireless transmitting method that allows data streams such as video data and audio data and asynchronous data such as commands and files to be effectively transmitted on a wireless transmission path.

Another object o the present invention is to provide a wireless transmitting method that allows data streams such as video data and audio data and asynchronous data such as commands and files to be transmitted free of an error on a wireless transmission path.

To solve the above-described problem, the present invention is a wireless transmitting method, comprising the steps of forming a frame having a predetermined time period, placing a stream transmission period and an asynchronous transmission period in the same transmission path, the stream transmission period having a predetermined transmission band for successively transmitting data streams, transmitting isochronous data in the stream transmission period, and transmitting asynchronous data in the asynchronous transmission period.

In the wireless transmitting method according to the present invention, the stream transmission period and the asynchronous transmission period are adaptively varied.

Moreover, in the wireless transmitting method according to the present invention, an error correction code is added to the isochronous data. In addition, a re-transmitting procedure is defined for the asynchronous data.

The present invention is a wireless transmitting method, comprising the steps of forming a frame having a predetermined time period, placing a stream transmission period and an asynchronous transmission period in the same transmission path, the stream transmission period having a predetermined transmission band for successively transmitting data streams, transmitting isochronous data in the stream transmission period, and transmitting asynchronous data in the asynchronous transmission period. Thus, as with the IEEE 1394 interface, two types of wireless data transmission of data streams and asynchronous data can be performed.

The present invention is a wireless transmitting method, comprising the steps of forming a flame having a predetermined time period, placing a stream transmission period and an asynchronous transmission period in the same transmission path, the stream transmission period having a predetermined transmission band for successively transmitting data streams, transmitting isochronous data in the stream transmission period, and transmitting asynchronous data in the asynchronous transmission period, wherein the stream transmission period and the asynchronous transmission period are adaptively varied. Thus, two types of wireless data transmission of datastreams and asynchronous data can be performed.

In the present invention, an error correction code is added to the isochronous data and a re-transmitting procedure is defined for the asynchronous data. Thus, isochronous data can be transmitted at high speed. In addition, data free of an error can be transmitted. Consequently, asynchronous data can be securely transmitted.

Embodiments of the invention will now be described, by way of example only, with reference to the accompanying drawings, in which:
Fig. 1 is a schematic diagram showing an example of a wireless network system according to the present invention;
Fig. 2 is a schematic diagram for explaining a star type network system;
Fig. 3 is a schematic diagram for explaining the structure of one frame of the wireless network system according to the present invention;
Fig. 4 is a flow chart for explaining a band allocating process;
Fig. 5 is a flow chart for explaining a band allocating process;
Fig. 6 is a flow chart for explaining a stream transmitting process;
Fig. 7 is a flow chart for explaining a stream transmitting process;
Figs. 8A to 8C are schematic diagrams for explaining an allocation changing process of one frame; and
Fig. 9 is a block diagram showing an example of a wireless node of the wireless network system according to the present invention.

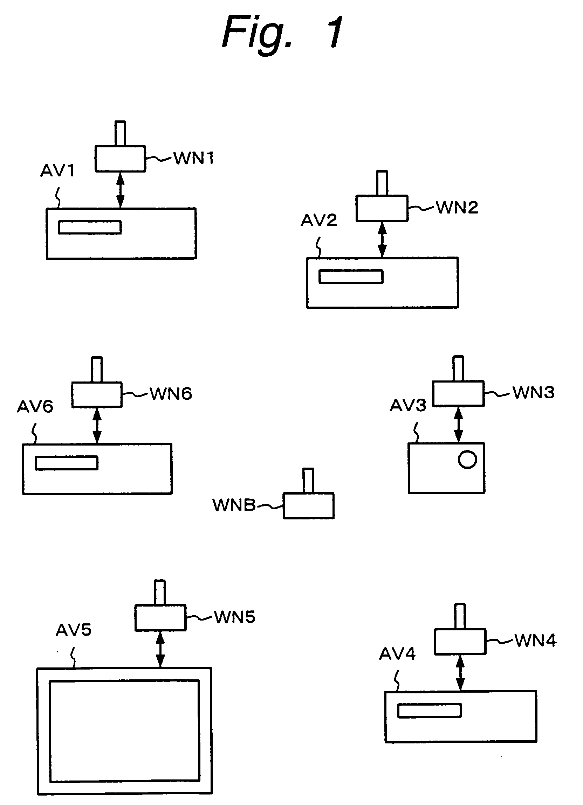

According to the present invention, as with the IEEE 1394 interface, a system that wirelessly transmits a data stream (such as video data or audio data) and asynchronous data (such as commands) is structured. Fig. 1 shows an outline of such a wireless network system.

In Fig. 1, WN1, WN2, WN3, ... are wireless nodes as peripheral communicating stations. Digital audio units or digital video units AV1, AV2, .., such as a CD player, an MD recorder/player, a digital VCR, a digital camera, a DVD player, and a television receiver can be connected to the wireless nodes WN1, WN2, ... In addition, a personal computer can be connected to the wireless nodes WN1, WN2, WN3, .... Each of the digital audio units and digital video units AV1, AV2, ... connected to the wireless nodes WN1, WN2, ... has the IEEE 1394 digital interface. The wireless nodes WN1, WN2, ... and the digital audio units and digital video units AV1, AV2, ... are connected with the IEEE 1394 digital interface.

WNB is a wireless node as a controlling station. The wireless node WNB as the controlling station exchanges control data with the wireless nodes WN1, WN2, ... as the communicating stations. The wireless nodes WN1, WN2, ... as the communicating stations communicate each other under the control of the wireless node WNB as the controlling station. The wireless nodes WN1, WN2, ... as the communicating stations wirelessly exchange chronologically continuous data streams (isochronous data) and asynchronous data such as commands.

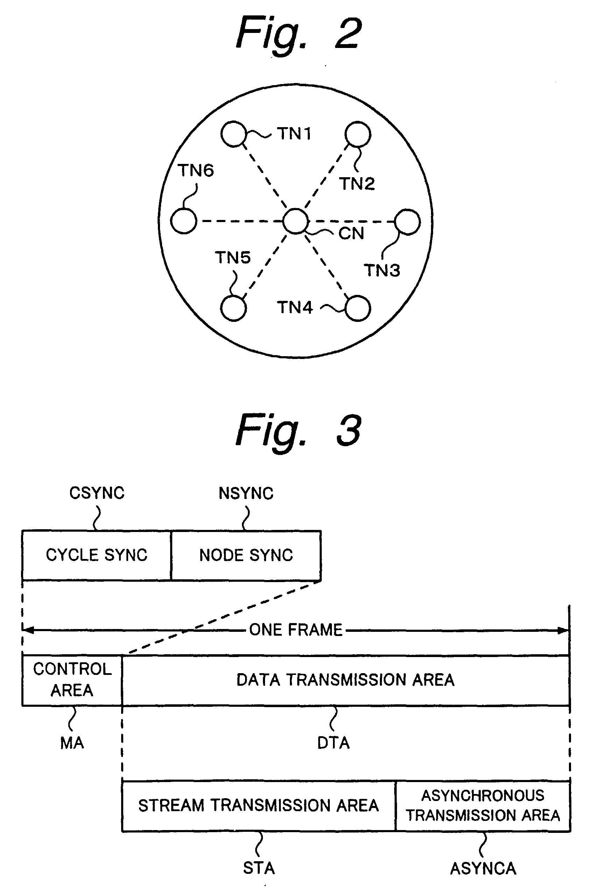

In this example, as shown in Fig. 2, a star type topology wireless LAN (Local Area Network) is structured. In the star type topology, the wireless LAN is composed of a central controlling station CN and peripheral terminal stations TN1, TN2, ... The terminal stations TN1, TN2, ... exchange data under the control of the central controlling station CN. The central controlling station CN corresponds to the wireless node WNB. The terminal stations TN1, TN2, ... correspond to the wireless nodes WN1, WN2, ... It should be noted that the structure of the wireless LAN is not limited to such a star type topology.

Control data, chronologically continuous data streams such as audio data and video data, and asynchronous data such as commands are transmitted between the wireless nodes WN1, WN2, ... and the wireless node WNB. In the system according to the present invention, these types of data are transmitted as frames as shown in Fig. 3. With frames, data streams such as video data and audio data and asynchronous data such as commands can be effectively transmitted.

Fig. 3 shows a frame structure of data transmitted between the wireless nodes WN1, WN2, ... and the wireless node WNB. One frame has a predetermined length. As shown in Fig. 3. one frame is composed of a control area MA and a data transmission area DTA.

As shown in Fig. 3, the control area MA is used to exchange network shared information and link information.. The control area MA is composed of a frame synchronous portion CSYNC and a node synchronous portion NSYNC. The frame synchronous portion CSYNC is used to control down link information. The node synchronous portion NSYNC is used to control up link information. On the other hand, the data transmission area DTA is composed of a stream transmission area STA and an asynchronous transmission area ASYNCA. In the stream transmission area STA, a transmission band is assured. In the asynchronous transmission area ASYNCA, although a transmission band is not assured, but a re-transmitting procedure or the like has been defined.

In the data transmission area DTA, the stream transmission area STA is used to perform high speed transmission equivalent to the isochronous transmission mode in the IEEE 1394 interface. In the stream transmission area STA, a data stream such as video data and audio data is transmission. Before data in the stream transmission area STA is transmitted, it is determined whether or not a transmission band is allocatable. When the transmission band is allocatable, a data stream is transmitted with the transmission band. In the stream transmission area STA, data can be transmitted at high speed with the secured band.

In the stream transmission area STA, since data is transmitted at high speed, it is difficult to perform a data re-transmitting operation. When an error takes place in a data stream such as audio data or video data, the error can be corrected to some extent by an interpolating process or the like. However, if errors frequently take place, countermeasures are required. Thus, to prevent errors from frequently taking place, an error correction code as a block code is added to data transmitted in the stream transmission area STA.

The asynchronous transmission area ASYNCA is equivalent to the asynchronous transmission mode of the IEEE 1394 interface. The asynchronous transmission area ASYNCA is used to transmit asynchronous data such as commands. In this example, data is transmitted as frames. In addition, since the asynchronous transmission area ASYNCA is provided, while data streams are being transmitted, asynchronous data can be transmitted.

In the asynchronous transmission area ASYNCA, since asynchronous data such as commands is transmitted, an error should be prevented from taking place. Thus, with an acknowledgment signal received from the remote party, the data re-transmitting operation is performed so as to transmit error-free data.

Thus, in the system according to the present invention, data is transmitted as frames. Data streams such as video data and audio data are transmitted in the stream transmission area STA with a secured band. On the other hand, asynchronous data such as commands is transmitted in the asynchronous transmission area ASYNCA. When a data stream is transmitted, a transmission band acquiring process is performed.

Data transmissions between the wireless nodes WN1, WN2, ... are controlled by a polling operation of the wireless node WNB. The wireless node WNB as the controlling station polls the wireless nodes WN1, WN2, ... With the polling operation, the wireless node WNB as the controlling station obtains information of the wireless nodes WN1, WN2, ... and information of the band for use.

When a data stream transmission request is issued from the wireless node WN1, WN2, ..., by the polling operation, the requested wireless node WN1, WN2, ... responses to the request and issues a transmission request to the wireless node WNB as the controlling station. The wireless node WNB as the controlling station determines whether or not bands for the stream transmission area STA of the wireless node WN1, WN2, ... are allocatable. When the bands are allocatable, the wireless node WNB secures the band. The requested wireless node WN1, WN2, ... transmits a relevant data stream with the band in the stream transmission area STA to the remote party.

Transmission and reception in the polling operation is performed with for example asynchronous data in the asynchronous transmission area ASYNCA of one frame. Alternatively, instead of asynchronous data in the asynchronous transmission area ASYNCA, a control signal in the control area MA at the beginning of the frame may be used.

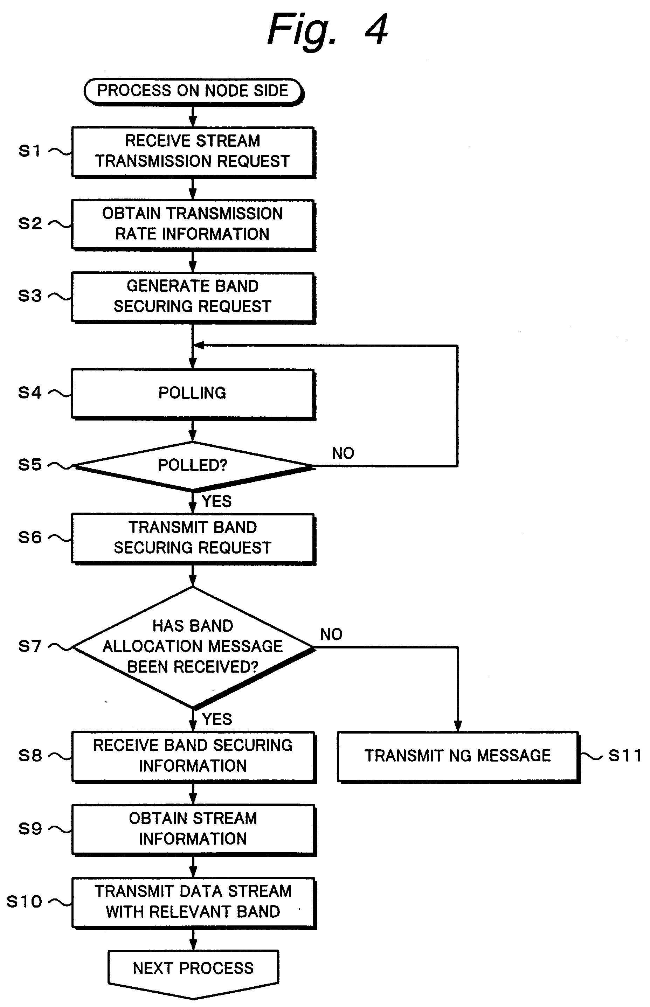

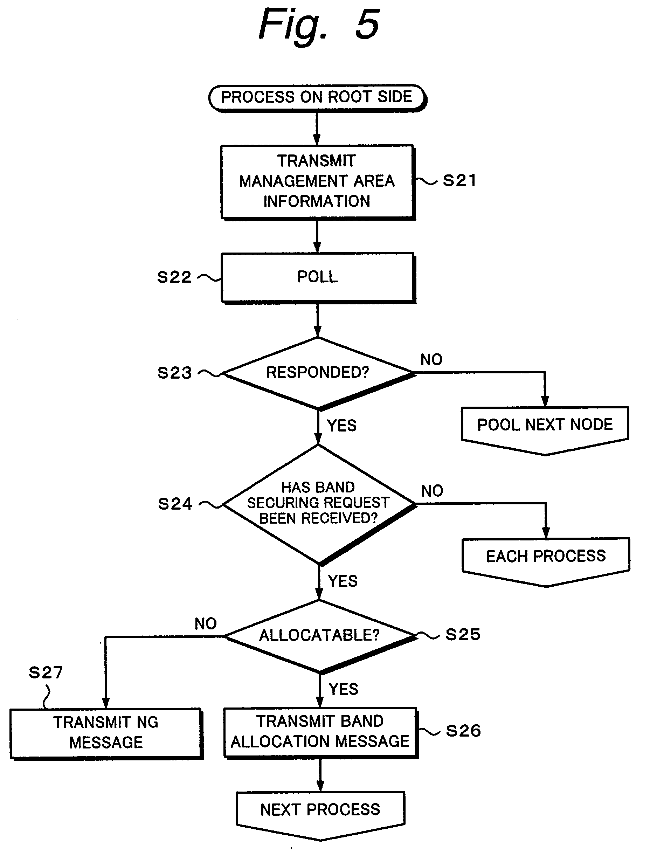

Thus, when a data stream is transmitted, the wireless node WNB as the controlling station performs the transmission band securing process with the polling operation. Figs. 4 and 5 are flow charts showing the transmission band securing process with the polling operation. Fig. 4 shows a process performed by the wireless nodes WN1, WN2, ... as the communicating stations. Fig. 5 shows a process performed by the wireless node WNB as the controlling station.

The wireless node WN1, WN2, ... receives a data stream transmission request from a unit through the interface (at step S1). When the wireless node WN1, WN2, ... receives the data stream transmission request, the wireless node WN1, WN2, ... obtains the transmission rate of the data stream (at step S2). It should be noted that the transmission rate of a data stream is not constant. In other words, the bit rate of MPEG2 data varies corresponding to a picture pattern and a motion thereof. Corresponding to the transmission rate of the data stream, the band secured in the stream transmission area STA varies. At step S2, it is determined whether the band corresponding to the transmission rate can be secured.

When the required band can be secured, a band securing request including a transmission request and a secured band is generated (at step S3). Thereafter, the band securing request is polled (at step S4).

As shown in fig. 5, the wireless node WNB as the controlling station transmits management area information that represents what node of the network has transmitted a data stream with what band (at step S21). The management area information is transmitted in the asynchronous data area ASYNCA. Alternatively, the management area information may be transmitted in the control area MA at the beginning of each frame.

After the wireless node WNB has transmitted the management area information, the wireless node WNB polls the wireless nodes WN1, WN2, ... using the asynchronous area ASYNCA (at step S22).

As with steps S4 and S5 shown in Fig. 4, before the wireless node WN1, WN2, ... transmits a data stream, the wireless node WN1, WN2, ... waits until the wireless node WNB as the controlling station performs the polling operation. When the wireless node WNB as the controlling station polls the wireless node WN1, WN2,..., it is determined that the wireless node WN1, WN2, ... has been polled (at step S5). After the wireless node WN1, WN2, ... has been polled, it transmits the band securing request generated at step S3 to the wireless node WNB as the controlling station (at step S6).

At step S23 shown in Fig. 5, after the wireless node WNB has polled the wireless node WN1, WN2, ..., the wireless node WNB determines whether the wireless node WN1, WN2, ... has responded to the polling operation. When the wireless node WN1, WN2, ... has not responded to the polling operation, the wireless node WNB polls the next node. When the next node has responded to the polling operation, the wireless node WNB determines whether or not it has received the band securing request (at step S24).

At step S6 shown in Fig. 4, when the wireless node WN1, WN2, ... that transmits a data stream has been polled, it transmits the band securing request to the wireless node WNB as the controlling station. Thus, the wireless node WNB as the controlling station receives the band securing request from the wireless node WN1, WN2, ... that transmits the data stream.

After the wireless node WNB as the controlling station has polled the wireless node WN1, WN2, ..., it is determined whether or not the wireless node WNB has received a response to the polling operation at step S23. When the wireless node WNB has received a response to the polling operation, it is determined whether or not the wireless node WNB has received the band securing request at step S24. When the wireless node WNB has received the band securing request, it is determined whether or not the required band can be allocated (at step S25). When the required band cannot be allocated, the wireless node WNB transmits an NG message to the wireless node WN1, WN2, ... (at step S27). When the required band can be allocated, the wireless node WNB transmits a band allocation message to the wireless node WN1, WN2, ... (at step S26).

At step S7 shown in Fig. 4, after the wireless node WN1, WN2, ... has transmitted the band securing request to the wireless node WNB as the controlling station, the wireless node WN1, WN2, ... waits for the band allocation message received from the wireless node WNB. After the wireless node WN1, WN2, ... has received the band allocation message from the wireless node WNB (at step S8), it obtains data stream information (at step S9) and transmits the data stream with the band corresponding to the received band allocation message (at step S10). When the wireless node WN1, WN2, ... has not received the band allocation message at step S7, it sends to the interface a message that represents that data cannot be transmitted (at step S11).

When a data stream transmission request is issued as described above, a required band is secured in the stream transmission area STA. With the band, a data stream is transmitted.

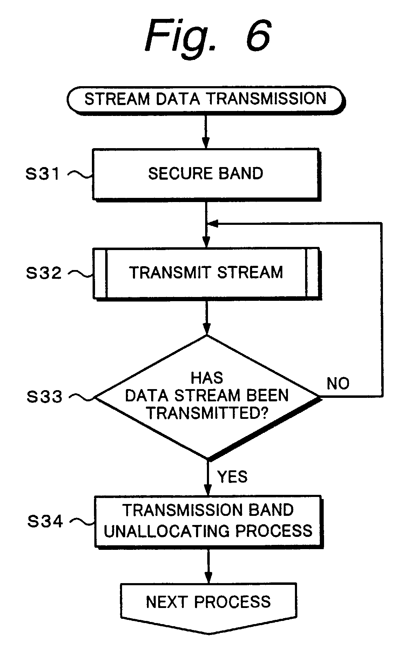

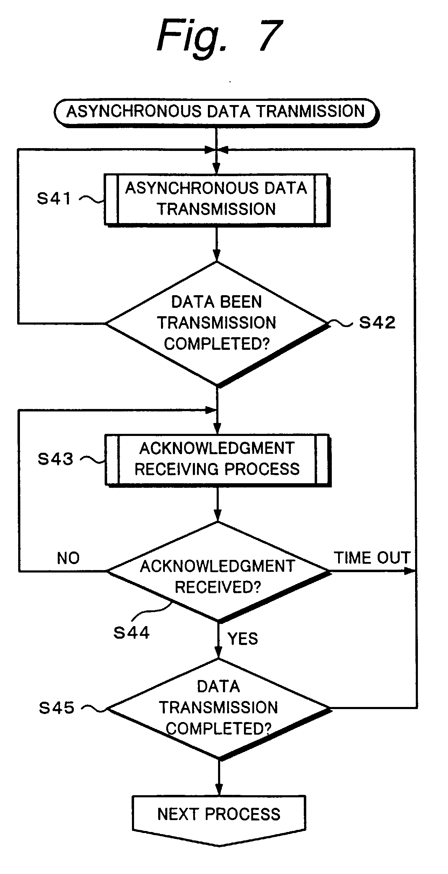

As described above, in the system according to the present invention, data is transmitted as frames. Data streams such as video data or audio data are transmitted in the stream transmission area STA. Asynchronous data such as commands is transmitted in the asynchronous transmission area ASYNCA. As shown in Fig. 6, a required band is secured in the stream transmission area STA. As shown in Fig. 7, the re- transmitting operation is performed in the asynchronous transmission area ASYNCA.

In other words, Fig. 6 shows a transmitting process in the stream transmission area STA. Fig. 7 shows a transmitting process in the asynchronous transmission area ASYNCA.

In Fig. 6, when a data stream is transmitted in the stream transmission area STA, a transmission band is secured (at step S31). The transmission band securing process is performed as shown in Figs. 4 and 5. After the transmission band has been secured, the data stream is transmitted with the secured band (at step S32). Thereafter, it is determined whether or not the data stream has been transmitted (at step S33). When the data stream has not been transmitted, the data stream is continuously transmitted. When the data stream has been transmitted, the band is unallocated (at step S34). Thereafter, the data stream transmitting process is completed.

In Fig. 7, asynchronous data is transmitted in the time period of the asynchronous transmission area ASYNCA (at step S41). Thereafter, it is determined whether or not the asynchronous data has been transmitted (at step S42). Until the asynchronous data is completely transmitted, it is continuously transmitted.

After the asynchronous data has been transmitted, an acknowledgment signal receiving process is performed (at step S43). It is determined whether or not the acknowledgment signal has been received from the remote party (at step S44). When the asynchronous signal has been successfully transmitted to the remote party, an acknowledgment response ACK is sent back. When the asynchronous signal has not been successfully transmitted to the remote party, an acknowledgment response ACK is not sent back or a no-connection response NACK is sent back.

When the acknowledgment signal has not been received for a predetermined time period at step S44, the flow returns to step S41. At step S41, the asynchronous data is transmitted. When the acknowledge signal has been received at step S44, it is determined whether the received acknowledgment signal is the acknowledgment response ACK or no-connection response NACK. In addition, it is determined whether or not the data has been successfully transmitted (at step S45). When the no-connection response NACK has been received and thereby the data has not been successfully transmitted, the flow returns to step S11. At step S11, the asynchronous data is transmitted.

When the acknowledgment signal has not been received for a predetermined time period or the no- connection response NACK has been received, since data has not been successfully transmitted to the remote party, the data re-transmitting operation is performed.

When the acknowledgment signal has been received at step S44 and the acknowledgment signal at step S45 is the acknowledgment response ACK, the data has been successfully transmitted to the remote party. When the data has been successfully transmitted to the remote party, the transmission of the asynchronous data is completed.

In the system according to the present invention, data is transmitted as frames. Data stream such as video data and audio data are transmitted in the stream transmission area STA. Asynchronous data such as commands is transmitted in the asynchronous transmission area ASYNCA. In the stream transmission area STA, a required band is secured in advance. In the asynchronous transmission area ASYNCA, the re-transmission controlling process is performed. The time period of the stream transmission area STA and the time period in the asynchronous transmission area ASYNCA are adaptively varied in one frame corresponding to a communication state. Thus, when a data stream is affordably transmitted, the time period of the asynchronous transmission area ASYNCA is increased. Thus, the data can be effectively transmitted.

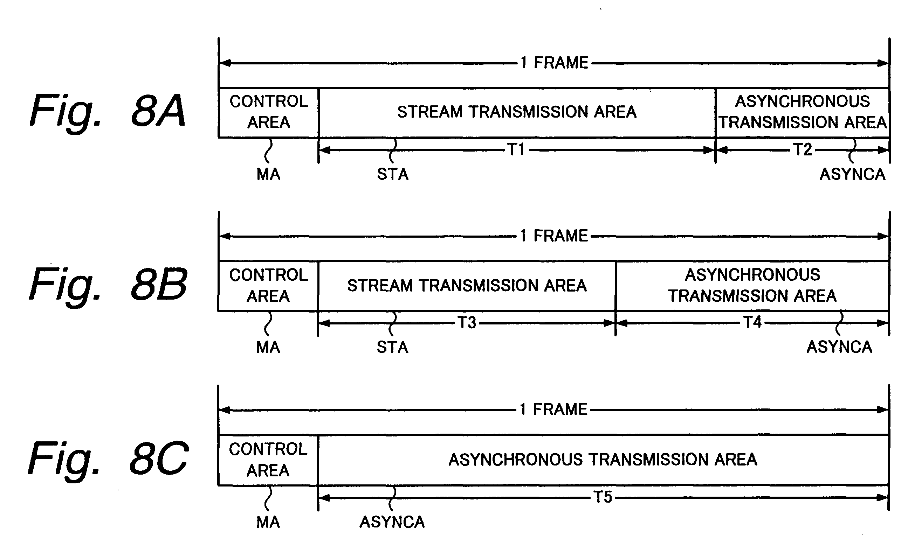

In other words, as shown in Fig. 8A, when a data stream requires a wide band, most of time period T1 of one frame is used for the stream transmission area STA. Time period T2 at the end of one frame is used for the asynchronous transmission area ASYNCA.

On the other hand, as shown in Fig. 8B, when a data stream does not require a large band, the stream transmission area STA is narrowed to time period T3. Instead, time period T4 of the asynchronous transmission area ASYNCA is increased.

When a data stream is not transmitted, as shown in Fig. 8C, time period T5 of data transmission area in one frame is used for the asynchronous transmission area ASYNCA.

The band of the stream transmission area STA of one frame is adaptively varied corresponding to a data stream to be transmitted. Thus, two types of data transmission of data streams and asynchronous data can be effectively performed.

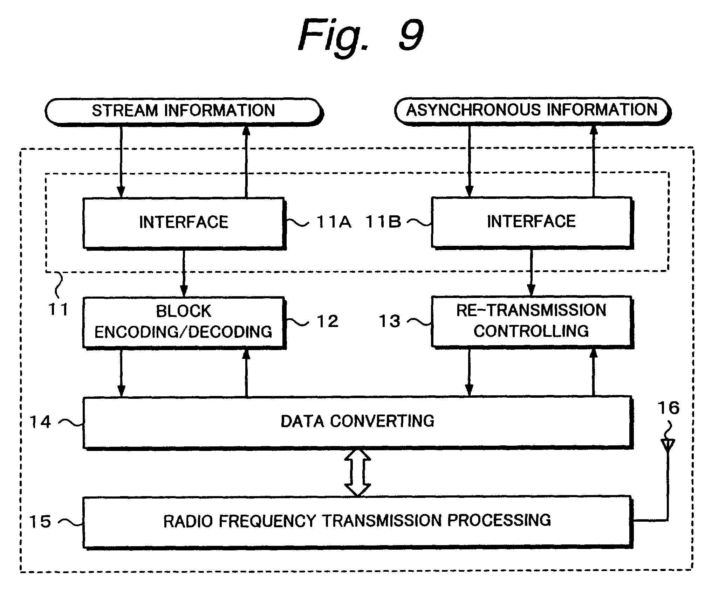

Fig. 9 shows the structure of each of the wireless nodes WN1, WN2, ..., and WNB. The structure of the wireless node WNB as the controlling station is basically the same as the structure of each of the wireless nodes WN1, WN2, ... as the communicating stations.

As shown in Fig. 9, each of the wireless nodes WN1, WN2, ... and WNB has an IEEE 1394 digital interface 11. The digital interface 11 has an interface portion 11A and an interface portion 11B. The interface portion 11A handles a chronologically continuous data stream (isochronous data) such as digital audio data and digital video data. The interface portion 11B handles asynchronous data such as commands.

The interface portion 11A that handles isochronous data has a block encoding/decoding portion 12. On the other hand, the interface portion 11B that handles asynchronous data has are-transmission controlling portion 13. The re-transmission controlling portion 13 waits for an acknowledgment signal received from the remote party. When an acknowledgment signal is not received or a no-connection response NACK is received, the re- transmission controlling portion 13 retransmits relevant data.

Each of the wireless nodes WN1, WN2, ... and WNB has a data converting portion 14 and a radio frequency transmission processing portion 15.

The data converting portion 14 packetizes transmission data in a predetermined format or disassembles packets of reception data.

The radio frequency transmission processing portion 15 modulates the transmission signal, converts the resultant signal into a signal of a predetermined frequency, amplifies the resultant signal in a desired power level, extracts a signal of a predetermined frequency from the reception signal, converts the resultant signal into a signal of an intermediate frequency, and demodulates the resultant signal. A variety of modulating methods have been proposed. Examples of the modulating methods are QPSK and multi- value QAM modulating method. Alternatively, the resultant data may be secondarily modulated by spectrum dispersing method or OFDM (Orthogonal Frequency Division Multiplexing) method.

When a data stream is transmitted, it is supplied to the block encoding/decoding portion 12 through the digital interface 11A. The block encoding/decoding portion 12 adds an error correction code in the horizontal direction and vertical direction to the data stream. An example of the error correction code is Reed-Solomon code. An output signal of the block encoding/decoding portion 12 is supplied to the data converting portion 14.

The data converting portion 14 packetizes the data stream in a predetermined format. Packets of the data stream are supplied to the radio frequency transmission processing portion 15 in the time period of the stream transmission area STA. The radio frequency transmission processing portion 15 modulates the signal with a predetermined band, converts the resultant signal into a signal of a predetermined frequency, and amplifies the resultant signal in a desired power level. An output signal is the radio frequency transmission processing portion 15 is transmitted from an antenna 16.

When asynchronous data is transmitted, it is supplied to the re-transmission controlling portion 13 through the digital interface 11B. An output signal of the re-transmission controlling portion 13 is supplied to the data converting portion 14. The data converting portion 14 packetizes the data stream in a predetermined format. Packets of the synchronous data are supplied to the radio frequency transmission processing portion 15 in the time period of the asynchronous transmission area ASYNCA. The radio frequency transmission processing portion 15 modulates the signal received from the data converting portion 14, converts the resultant signal into a signal of a predetermined frequency, and amplifies the resultant signal in a desired power level. An output signal of the radio frequency transmission processing portion 15 is transmitted from the antenna 16.

When data is received, a signal received from the antenna 16 is supplied to the radio frequency transmission processing portion 15. The radio frequency processing portion 15 converts the reception signal into a signal of a predetermined intermediate frequency and demodulates the resultant signal into a base band signal. An output signal of the radio frequency transmission processing portion 15 is supplied to the data converting portion 14. The data converting portion 14 disassembles the packets.

Data in the time period of the stream transmission area STA is supplied to the block encoding/decoding portion 12. The block encoding/decoding portion 12 performs an, error correcting process for the reception data. The block encoding/decoding portion 12 outputs a data stream. The data stream is supplied to a unit connected to the wireless node through the interface portion 11A that handles isochronous data.

Data in the time period of the asynchronous transmission area ASYNCA is supplied to the re-transmission controlling portion 13. The re-transmission controlling portion 13 detects an error of the reception data. When the re-transmission controlling portion 13 has not detected an error of the reception data, it outputs an acknowledgment ACK. When the re-transmission controlling portion has detected an error of the reception data, it outputs a no-connection response NACK. When the reception data does not have an error, asynchronous data is obtained from the reception data. The asynchronous data is supplied to a unit connected to the wireless node through the interface portion 11B that handles asynchronous data.

In the system according to the present invention, data is transmitted as frames. One frame is divided into a time period for the stream transmission area STA and a time period for the asynchronous transmission area ASYNCA. Thus, as with the IEEE 1394 interface, both data streams (such as video data and audio data) and asynchronous data (such as commands) can be transmitted on a wireless transmission path.

The length of one frame and the lengths of the stream transmission area and asynchronous transmission area are designated corresponding to transmission conditions. In this example, the asynchronous transmission area is preceded by the stream transmission area. However, the present invention is not limited to such an arrangement. Instead, the stream transmission area may be preceded by the asynchronous transmission area.

The present invention is a wireless transmitting method, comprising the steps of forming a frame having a predetermined time period, placing a stream transmission period and an asynchronous transmission period in the same transmission path, the stream transmission period having a predetermined transmission band for successively transmitting data streams, transmitting isochronous data in the stream transmission period, and transmitting asynchronous data in the asynchronous transmission period. Thus, as with the IEEE 1394 interface, two types of data transmission of data stream and asynchronous data can be wirelessly performed.

The present invention is a wireless transmitting method, comprising the steps of forming a frame having a predetermined time period, placing a stream transmission period and an asynchronous transmission period in the same transmission path, the stream transmission period having a predetermined transmission band for successively transmitting data streams, transmitting isochronous data in the stream transmission period, and transmitting asynchronous data in the asynchronous transmission period, wherein the stream transmission period and the asynchronous transmission period are adaptively varied. Thus, two types of data transmission of data streams and asynchronous data can be effectively performed.

According to the present invention, an error correction code is added to the isochronous data, and a re-transmitting procedure is defined for the asynchronous data. Thus, isochronous data can be transmitted at high speed. In addition, asynchronous data can be securely transmitted free from errors.

Having described a specific preferred embodiment of the present invention with reference to the accompanying drawings, it is to be understood that the invention is not limited to that precise embodiment, and that various changes and modifications may be effected therein by one skilled in the art without departing from the scope or the spirit of the invention as defined in the appended claims.

## Claims

1. A wireless transmitting method, comprising
the steps of:
forming a frame having a predetermined time period;
placing a stream transmission period and an asynchronous transmission period in the same transmission path, the stream transmission period having a predetermined transmission band for successively transmitting data streams;
transmitting isochronous data in the stream transmission period; and
transmitting asynchronous data in the asynchronous transmission period.

2. The wireless transmitting method as set forth in claim 1,
wherein the stream transmission period and the asynchronous transmission period are adaptively varied.

3. The wireless transmitting method as set forth in claim 1 or 2, further comprising the step of:
unallocating the stream transmission period for the asynchronous transmission period when the data amount of isochronous data transmitted in the stream transmission period is small.

4. The wireless transmitting method as set forth in claim 1, 2 or 3, further comprising the step of:
securing the transmission band with asynchronous data transmitted in the asynchronous transmission period.

5. The wireless transmitting method as set forth in any one of the preceding claims, further comprising the step of:
securing the transmission band with data in a control area of the frame.

6. The wireless transmitting method as set forth in any one of the preceding claims,
wherein an error correction code is added to the isochronous data, and
wherein a re-transmitting procedure is defined for the asynchronous data.
